# EUROPÄISCHE PATENTSCHRIFT

(11) **EP 3 645 286 B1**
(45) Veröffentlichungstag und Bekanntmachung des Hinweises auf die Patenterteilung: **11.05.2022**
(21) Anmeldenummer: 18734154.0
(22) Anmeldetag: 19.06.2018
(51) Int. Cl.: B32B 38/10, B32B 37/14, B23K 26/36, B32B 37/06, B32B 37/10

(54) **BAUTEIL, DAS MIT MEHREREN ÜBEREINANDER ANGEORDNETEN LAGEN GEBILDET IST, SOWIE EIN VERFAHREN ZU SEINER HERSTELLUNG**
COMPONENT MADE UP OF SEVERAL STACKED LAYERS, AS WELL AS A PROCESS FOR ITS MANUFACTURE
COMPOSANT FAIT DE PLUSIEURS COUCHES EMPILÉES, AINSI QU'UN PROCÉDÉ POUR SA FABRICATION

(30) Priorität: 30.06.2017 DE 102017211171
(43) Veröffentlichungstag der Anmeldung: 06.05.2020
(73) Patentinhaber: Fraunhofer-Gesellschaft zur Förderung der angewandten Forschung e.V., 80686 München (DE)
(72) Erfinder: GEBAUER, Jana, 01326 Dresden (DE); FRIEDRICH-SCHILLING, Niels, 01156 Dresden (DE)
(74) Vertreter: Pfenning, Meinig & Partner mbB
(86) Internationale Anmeldenummer: PCT/EP2018/066228
(87) Internationale Veröffentlichungsnummer: WO 2019/002018

(56) Entgegenhaltungen:
- EP-A1- 1 835 792
- US-A1- 2008 035 271
- US-A1- 2015 083 343
- US-A1- 2016 315 649

## Beschreibung

Die Erfindung betrifft ein Bauteil, das mit mehreren übereinander angeordneten Lagen, die mit faserverstärktem Kunststoffmaterial aufgebaut sind, gebildet ist, sowie ein Verfahren zu seiner Herstellung. Außerdem soll ein Werkstoffabtrag, mit einer vorgegebenen Tiefe ausgehend von einer Oberfläche des Bauteils, mit einem Laserstrahl erfolgen. Die Bauteile können auch mit einer Kombination von faserverstärktem und unverstärktem Kunststoffmaterial gebildet sein.

Es ist bekannt, Bauteile, die aus faserverstärktem Kunststoffmaterial gebildet sind, für viele Applikationen, insbesondere im Leichtbau einzusetzen. Dabei werden auch Bauteile, die mit mehreren übereinander angeordneten und in der Regel stoffschlüssig miteinander verbundenen Lagen aus faserverstärktem Kunststoffmaterial gebildet sind, eingesetzt. Als Fasern können überwiegend Glas-, Kohlenstofffasern oder auch Fasern aus einem keramischen Werkstoff eingesetzt werden.

Geeignete Kunststoffe sind Harze oder Thermoplaste. Die einzelnen Lagen werden üblicherweise bei der Konsolidierung bei erhöhter Temperatur und wirkender Druckkraft, mit der die Lagen zusammen gepresst werden, stoffschlüssig miteinander verbunden.

Bei Bauteilen kann es erforderlich sein, an der Oberfläche Vertiefungen auszubilden, in die beispielsweise Sensoren, Aktoren oder andere elektrische oder mechanische Komponenten eingesetzt werden können. Es kann auch eine Ausbildung von Vertiefungen gewünscht werden, in die ein Schmiermittel mit einem definierten Volumen eingefüllt werden kann. Solche Vertiefungen können als Schmiermitteltaschen bezeichnet werden.

Es kommt bei der Ausbildung von Vertiefungen häufig auf die Einhaltung bestimmter Abmessungen an, was sowohl die Tiefe ausgehend von der Oberfläche, wie auch die Länge und Breite betrifft.

Bei der Ausbildung von Vertiefungen ist ein Werkstoffabtrag ausgehend von einer Oberfläche des jeweiligen Bauteils erforderlich. Dies ist wegen der verstärkenden Fasern aber schwierig. Insbesondere bei mechanisch durchgeführtem Werkstoffabtrag, wie Fräsen oder Schleifen werden Ränder oder Kanten ausgebildet, die Ausbrechungen des Kunststoffes oder herausragende Faserenden aufweisen. Daher ist häufig auch eine aufwändige manuelle Nachbearbeitung erforderlich. Darüber hinaus sind die mechanischen Werkzeuge einem sehr hohen Verschleiß ausgesetzt.

Aufgrund des inhomogenen Aufbaus des Faser-Kunststoffverbundes bereitet auch ein Werkstoffabtrag mit Laserstrahlung wegen der unterschiedlichen Absorption des Kunststoffes und des Fasermaterials Probleme. Durch einen ungleichmäßigen Abtrags beider Materialien ergeben sich Schwierigkeiten bei der maßhaltigen Vertiefungsausbildung entsprechend vorgegebener Abmessungen ganz besonders bei der Einhaltung einer vorgegebenen Tiefe von Vertiefungen.

Aus EP 1 835 792 A1 ist ein Verfahren zur Herstellung von Leiterplatten be kannt, bei dem Löcher in der Oberfläche ausgebildet werden sollen.

Es ist daher Aufgabe der Erfindung, geeignete Ausbildungen eines Bauteils und eines Halbzeugs dafür sowie Möglichkeiten für die Herstellung eines Bauteils in dem mindestens eine Vertiefung ausgebildet werden soll anzugeben, bei denen eine vorgegebene Maßhaltigkeit und Qualität in einfacher Weise eingehalten werden kann.

Erfindungsgemäß wird diese Aufgabe mit einem Bauteil, dass die Merkmale des Anspruchs 1 aufweist, gelöst. Der Anspruch 8 definiert ein Verfahren zur Herstellung eines solchen Bauteils. Vorteilhafte Ausgestaltungen und Weiterbildungen der Erfindung können mit in untergeordneten Ansprüchen bezeichneten Merkmalen realisiert werden.

Das erfindungsgemäße Bauteil ist mit mehreren übereinander angeordneten Lagen, die mit einem Kunststoffmaterial gebildet sind, gebildet. Dabei soll zur Ausbildung einer Vertiefung ein Werkstoffabtrag, mit einer vorgegebenen Tiefe ausgehend von einer Oberfläche des Bauteils, mit einem Laserstrahl erfolgen. Es ist mindestens eine Lage aus einem faserverstärktem Kunststoffmaterial gebildet. Innerhalb des Bauteils ist eine weitere Lage in einer Tiefe angeordnet, so dass die Oberfläche, die in Richtung des auf die Oberfläche der weiteren Lage auftreffenden Brennflecks des Laserstrahls weist, in der Ebene angeordnet ist, bis zu der ein Werkstoffabtrag erfolgen soll.

Der Werkstoff der weiteren Lage weist eine Reflektivität des für einen Werkstoffabtrag eingesetzten Laserstrahls mit mindestens einer Wellenlänge auf, die mindestens 5 % größer, bevorzugt mindestens 7 % größer, als die Reflektivität der mindestens einen mit faserverstärktem Kunststoff gebildeten Lage (1.1, ...., 1.X) ist.

Bevorzugt ist mindestens die Lage, die eine Decklage an einer Oberfläche bildet, mit faserverstärktem Kunststoff gebildet.

Nach einer Bestrahlung mit dem Laserstrahl erfolgt in einem Bereich der Oberfläche ein Werkstoffabtrag ausgehend von der Bauteiloberfläche bis zur in Richtung des auftreffenden Laserstrahls weisenden Oberfläche der weiteren Lage bis eine Vertiefung mit vorgegebenen Abmaßen ausgebildet worden ist.

Eine weitere Lage sollte also für die eingesetzte Laserstrahlung transparenter und/oder reflektierender sein als die Lage(n) an denen ein Werkstoffabtrag erfolgen soll.

Die Lagen können auch als Laminate oder Prepregs bezeichnet werden. Die Fasern im faserverstärkten Kunststoffmaterial können in unterschiedlichster Form angeordnet und ausgerichtet sein. Die Fasern können auch als textile Gebilde, wie beispielsweise Gewebe, Gewirke oder Gelege innerhalb der Kunststoffmatrix in den Kunststoff eingebettet oder mit Kunststoff beschichtet sein.

Selbstverständlich können über einer weiteren Lage, mehr als eine Lage aus faserverstärktem Kunststoff mit einer kleineren Reflektivität angeordnet sein. Dadurch kann eine Vertiefung mit größerer Tiefe ausgebildet werden.

Der Werkstoffabtrag mit der Energie des eingesetzten Laserstrahls sollte so erfolgen, dass er bis an die bestrahlte Oberfläche einer weiteren Lage reicht.

Es besteht auch die Möglichkeit, einen Werkstoffabtrag von zwei sich gegenüberliegenden Seiten an den entsprechenden Oberflächen des Bauteils vorzunehmen. Dadurch können mehrere Vertiefungen ausgebildet werden. Dabei können mehrere weitere Lagen in unterschiedlichen Ebenen angeordnet sein.

Die Lage(n) an der/denen ein Werkstoffabtrag zur Ausbildung einer Vertiefung erfolgen soll, sollen so ausgebildet sein, dass sie mit einem Kunststoff und/oder Fasern gebildet ist/sind, in dem/denen Pigmente, insbesondere Kohlenstoff, besonders vorteilhaft Ruß enthalten ist oder Fasern eingesetzt sind, die mit oder aus Kohlenstoff gebildet sind.

Eine weitere Lage soll ohne Farb-Pigmente oder mit weißen Pigmenten gebildet sein. Es können erfindungsgemäß auch erheblich weniger Pigmente in einer weiteren Lage enthalten sein, als in Lagen von denen ein Werkstoffabtrag zur Ausbildung einer Vertiefung erforderlich ist.

Vorteilhaft kann auf der weiteren Lage eine dritte Lage in Richtung auf einen auftreffenden Laserstrahl unterhalb der mindestens einen Decklage angeordnet sein. Diese dritte Lage sollte aus oder mit einem Werkstoff gebildet sein, dessen Absorption für den eingesetzten Laserstrahl mindestens 10 % kleiner als die Absorption der weiteren Lage ist. Man kann so quasi von einem gradierten Aufbau sprechen. Mit einer solchen Ausführung besteht die Möglichkeit, eine Vertiefung in einem Bereich der Oberfläche des Bauteils auszubilden, die gestufte Tiefen ausgehend von der Oberfläche aufweist. Es kann also in mindestens einem Bereich einer Vertiefung an einem so ausgebildeten Bauteils mit einer Tiefe ausgebildet werden, bei dem ein Werkstoffabtrag mit Laserenergie bis zur Oberfläche der dritten Lage und mindestens ein Bereich der Vertiefung ausgebildet werden, bei dem der Werkstoffabtrag, bis an die Oberfläche einer weiteren, in Bestrahlungsrichtung unterhalb einer dritten Lage angeordneten, weiteren Lage erfolgt.

Eine weitere Lage und/oder eine dritte Lage kann/können aus unverstärktem Kunststoffmaterial gebildet sein und/oder eine abweichende Dicke als die Lagen aufweisen. Die weitere und/oder dritte Lage kann/können auch aus faserverstärktem Kunststoffmaterial und die Lagen aus unverstärktem Kunststoffmaterial gebildet sein. Diese Art von Lagen kann aber auch an der Oberfläche mit einer die jeweilige Laserstrahlung reflektierenden Beschichtung versehen sein.

Zumindest die Decklage oder die Lagen an denen ein Werkstoffabtrag zur Ausbildung einer Vertiefung erfolgen soll, sollten aus faserverstärktem Kunststoffmaterial gebildet sein, das bei einem Laserstrahl mit einer Wellenlänge im Bereich 340 nm bis 1900 nm die Laserstrahlung mit mindestens 5 % weniger reflektiert werden, als an einer weiteren oder dritten Lage.

Bei der Herstellung eines erfindungsgemäßen Bauteils sollte so vorgegangen werden, dass mehrere Lagen aus einem Kunststoffmaterial zwischen denen mindestens eine weitere Lage angeordnet ist, übereinander angeordnet werden, und durch ein Konsolidierungsverfahren bei der zumindest mit einer thermischen Behandlung eine stoffschlüssige Verbindung der Lagen erreicht wird, durchgeführt werden. Dabei ist mindestens eine der Lagen mit faserverstärktem Kunststoff gebildet.

Daran anschließend wird ein auslenkbarer Laserstrahl mit seinem Brennfleck auf eine Oberfläche mit einer Leistung gerichtet, so dass in einem vorgebbaren Oberflächenbereich des Bauteils ein Werkstoffabtrag bis zur Oberfläche der weiteren Lage erreicht und eine Vertiefung an der bestrahlten Oberfläche des Bauteils ausgebildet wird.

Der Brennfleck des Laserstrahls kann dabei mehrfach über den Oberflächenbereich, in dem der Werkstoffabtrag erfolgen soll, bewegt werden. Es kann ein Laserstrahl eingesetzt werden, dessen Wellenlänge zwischen 340 nm und 1900 nm ist.

Der Laserstrahl kann gepulst, bevorzugt mit einer Ein- und Ausschaltzeit im Bereich 10 ns bis 50 ns betrieben werden.

Der Brennfleck sollte mit einer Vorschubgeschwindigkeit im Bereich 1500 mm/s bis 3500 mm/s bewegt und der Laserstrahl mit einer Leistung im Bereich 5 W bis 30 W betrieben werden.

Zwischen mindestens einer Lage und der weiteren Lage kann eine dritte Lage angeordnet und in das Bauteil konsolidiert werden. Anschließend kann ein Werkstoffabtrag in einem Bereich des Bauteils ausgehend von einer Oberfläche des Bauteils bis zur Oberfläche der dritten Lage mit dem Laserstrahl durchgeführt werden. Dabei kann in einem weiteren Bereich ein Werkstoffabtrag der dritten Lage und mindestens einer aus faserverstärktem Kunststoffmaterial gebildeten Lage mit dem Laserstrahl durchgeführt werden, so dass eine Vertiefung in der Oberfläche des Bauteils ausgebildet werden kann, die zweifach in ihrer Tiefe abgestuft ist oder mindestens zwei Vertiefungen in der Oberfläche des Bauteils ausgebildet werden, die jeweils eine unterschiedliche Tiefe aufweisen.

Mit einer über einer weiteren Lage angeordneten dritten Lage kann ein gradierter Aufbau bzgl. des Absorptionsverhaltens für die Laserstrahlung erhalten werden. Eine dritte Lage kann beispielsweise andere oder weniger Pigmente aufweisen.

Eine weitere und eine dritte Lage kann man auch als Barriere, insbesondere eine optische Barriere bezeichnen. Sie behindern oder erschweren das Einkoppeln der Laserstrahlung, so dass der Werkstoff der jeweiligen Lage durch den Einfluss der Laserstrahlung nicht abgetragen wird. Außerdem kann das Prozessfenster für den Betrieb des Laserstrahls, insbesondere gegenüber einem Betrieb eines Lasers mit ultrakurzen Pulsen vergrößert und damit auch die Produktivität erhöht werden. Es kann mit höherer Leistung der Laserstrahlung gearbeitet werden. Das Verfahren ist somit auch für die Fertigung großer Stückzahlen geeignet.

Vorgegebene Maße von auszubildenden Vertiefungen können genauer eingehalten werden, ohne dass eine aufwändige Nachbearbeitung erforderlich ist.

Vertiefungen können reproduzierbar an vielen Bauteilen ausgebildet werden.

Eine Beeinflussung der Eigenschaften des Bauteils tritt durch den Einsatz von weiteren bzw. dritten Lagen nicht oder nur in sehr geringem Umfang auf.

In Vertiefungen können Bauelemente, wie z.B. Sensoren, Aktoren oder Verstärkungselemente passgenau eingesetzt und dadurch vorteilhaft auch formschlüssig gehalten werden.

So kann man beispielsweise für Lagen, die mit faserverstärktem Kunststoff gebildet sind schwarz eingefärbtes Polyamid PA6-GF und für eine weitere Lage transparentes PA6-GF einsetzen.

Schwarz eingefärbtes PA6-GF hat eine Reflektivität von 5 % bei den Laserwellenlängen 355 nm, 532 nm oder 1064 nm. Transparentes PA6-GF hat eine Reflektivität von 15 % bei einer Wellenlänge von 355 nm, eine Reflektivität von 45 % bei einer Wellenlänge von 532 nm oder eine Reflektivität von 35 % bis 40 % bei einer Wellenlänge von 1064 nm. Die genannten Werte beziehen sich auf den Ausgangszustand des jeweiligen Kunststoffes vor der Bestrahlung mit dem Laserstrahl.

Nachfolgend soll die Erfindung beispielhaft näher erläutert werden. Dabei können Merkmale der einzelnen Beispiele unabhängig vom jeweiligen Beispiel mit einem anderen Beispiel und auch mit Merkmalen, die im allgemeinen Teil der Beschreibung enthalten sind, kombiniert werden.

Dabei zeigen:
Figur 1 eine Schnittdarstellung durch ein Beispiel eines erfindungsgemäßen Bauteils und
Figur 2 eine Schnittdarstellung durch ein weiteres Beispiel eines erfindungsgemäßen Bauteils.

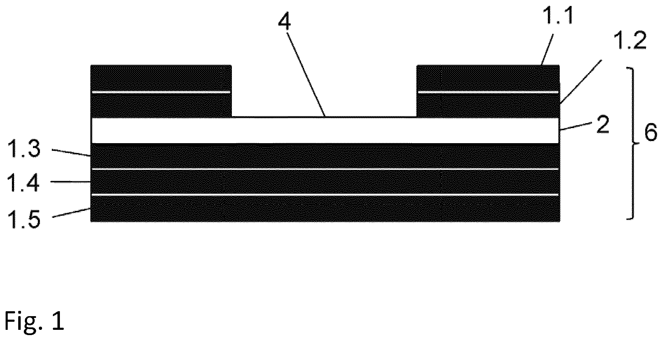

In Figur 1 ist ein FKV-Bauteil 6 mit fünf Lagen 1.1 bis 1.5 aus Laserstrahlung stark absorbierenden faserverstärktem Kunststoff gezeigt. Dabei sind drei Lagen 1.3 bis 1.5 übereinander angeordnet. Zur Integration eines Inserts soll in dem Bauteil ein Volumenabtrag von 0,5 mm Tiefe zur Ausbildung einer Vertiefung realisiert werden. Diese Tiefe der Vertiefung 4 in einer Oberfläche des Bauteils 6 entspricht der Position der Oberfläche einer weiteren Lage 2, die oberhalb der drei Lagen 1.3 bis 1.5 angeordnet ist. Diese weitere Lage 2 beinhaltet keinen Absorber in Form von Ruß. Auf der weiteren Lage sind zwei Lagen 1.1 und 1.2 ebenfalls übereinander angeordnet. Der gesamte Lagenaufbau wurde in der Heißpresse konsolidiert wobei die Lagen stoffschlüssig miteinander verbunden worden sind. In den Lagen 1.1 bis 1.5 war Ruß enthalten, so dass Laserstrahlung, die auf die oberste Lage 1.1 als Decklage und der Lage 1.2 gerichtet wird, mit mindestens 60 % mehr als vom Werkstoff der weiteren Lage 2 absorbiert wird.

Das konsolidierte Bauteil 6 hatte eine Gesamtdicke von 2 mm und wurde mit einem Laserstrahl, der von einer gepulst betriebenen Laserstrahlquelle mit einer Wellenlänge im Bereich 340 nm - 360 nm und Nanosekunden-Pulsen (10 bis 50 ns) auf die nach außen weisende Oberfläche der Decklage 1.1 gerichtet wird, bestrahlt. Zur zweidimensionalen Strahlablenkung wird ein Galvanometerscanner mit Planfeldoptik (Brennweite 163 mm) verwendet. Der Laserstrahl wird dabei in Form paralleler, sich überlappender Linien über die jeweilige Oberfläche innerhalb des Bereichs, in dem die Vertiefung 4 ausgebildet werden soll, geführt. Die Anzahl der Wiederholungen ist so zu wählen, dass mindestens die Oberfläche der weiteren Lage 2 freigelegt worden ist. Dies kann normalerweise in etwa mit 60 bis 120 Prozesszyklen (Überfahrten) erreicht werden. Zu viele Zyklen verursachen dank der optischen Eigenschaften der weiteren Lage 2 als optische Barriereschicht keinen zusätzlichen Werkstoffabtrag. Unabhängig von der Faserausrichtung ist eine Schraffur mit sich kreuzenden Linien am besten geeignet, um ein gleichmäßiges Abtragsbild umzusetzen. Da die Laser-Parameter stets geometrieabhängig sind, gelten diese Angaben lediglich für eine Bearbeitungsfläche für ein Quadrat von rund 10 mm bis 30 mm Kantenlänge für Breite und Länge der Vertiefung 4. Eine Anpassung an andere Dimensionierungen einer auszubildenden Vertiefung kann leicht in wenigen Versuchen vorgenommen werden.

So kann eine Laserleistung von 5 W bis 12 Watt bei einer Vorschubgeschwindigkeit des Brennflecks von 1500 mm/s bis 3500 mm/s benutzt werden.

Zu Gunsten einer höheren Flexibilität in der Fertigung ist ein gradueller optischer Übergang in Form von Graustufen von der Lagen 1.1 über eine dritte Lage 5 zu der weiteren Lage 2 denkbar. So kann ein verminderter, durch die Bearbeitungsparameter steuerbarer Volumenabtrag in unterschiedlichen Tiefen umgesetzt werden.

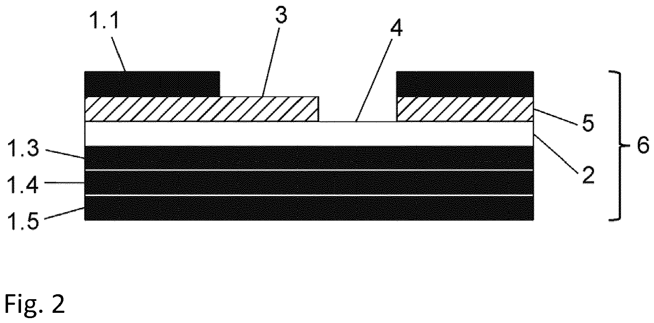

Bei dem in Figur 2 gezeigten Beispiel ist unterhalb der Decklage 1.1 eine dritte Lage 5 angeordnet, die mit einer geringen Anzahl von Rußpigmenten eingefärbt ist und dadurch eine um 15 % kleinere Absorption der eingesetzten Laserstrahlung bewirkt, als dies bei der Decklage 1.1 der Fall ist. Unterhalb ist eine mit weißen Pigmenten versehene weitere Lage 2 angeordnet, die mit ihren Eigenschaften der weiteren Lage 2 gemäß des Beispiels nach Figur 1 entspricht.

Dabei kann ein Bereich der Oberfläche des Bauteils 6 mit dem Laserstrahl so bestrahlt werden, dass ein Bereich 3 einer Vertiefung 4 ausgebildet wird, der eine geringere Tiefe der Vertiefung 4 aufweist, als der Bereich einer Vertiefung, in dem auch der Werkstoff der dritten Lage 5 mit der Energie des Laserstrahls abgetragen worden ist. Die Vertiefung 4 weist somit eine zweifach gestufte Vertiefung mit Bereichen, die jeweils eine unterschiedliche Tiefe aufweisen, auf.

In nicht dargestellter Form kann eine Vertiefung 4 ausgebildet werden, in denen mehr als zwei Bereiche mit unterschiedlicher Tiefe vorhanden sind.

Im Übrigen können die gleichen Parameter, wie zum Beispiel nach Figur 1 erläutert, genutzt werden.

Bei den Lagen 1.1 bis 1.5 handelt es sich bei beiden Beispielen um glasfaserverstärktes Polyamid mit einem hohen Rußgehalt.

Die weitere Lage 2 ist ebenfalls aus glasfaserverstärktem Polyamid ohne Ruß und die dritte Lage 5 ist ebenso aus glasfaserverstärktem Polyamid mit einem mittleren Rußgehalt gebildet.

Bei Bedarf kann eine Steigerung der Laserleistung bei einem Werkstoffabtrag der dritten Lage 5 angewendet werden. In diesem Falle stoppt der Laserabtrag an der Grenze zur weiß eingefärbten weiteren Lage 2.

## Patentansprüche

1. Bauteil, das mit mehreren übereinander angeordneten Lagen (1.1, ...,1.X), gebildet ist und bei dem ein Werkstoffabtrag zur Ausbildung einer Vertiefung an der Oberfläche des Bauteils, mit einer vorgegebenen Tiefe ausgehend von einer Oberfläche des Bauteils (6) mit einem Laserstrahl erfolgt ist, bei dem mindestens eine der Lagen (1.1, .....1.X) aus einem faserverstärktem Kunststoffmaterial gebildet ist, wobei diese mindestens eine Lage (1.1, ..... 1.X) mit einem Kunststoff und/oder Fasern gebildet ist/sind, in dem/denen Pigmente enthalten sind oder Fasern eingesetzt sind, die mit oder aus Kohlenstoff gebildet sind, und
innerhalb des Bauteils eine weitere Lage (2) ohne Farb-Pigmente, mit weißen Pigmenten oder mit erheblich weniger Pigmenten, als in mindestens einer Lage (1.1, .... 1.X) von der ein Werkstoffabtrag zur Ausbildung einer Vertiefung erfolgt ist, in einer Tiefe angeordnet ist, so dass die Oberfläche, die in Richtung des auf die Oberfläche der weiteren Lage auftreffenden Brennflecks des Laserstrahls weist, in der Ebene angeordnet ist, bis zu der der Werkstoffabtrag erfolgen soll und dabei
der Werkstoff der weiteren Lage (2) eine Reflektivität des für einen Werkstoffabtrag eingesetzten Laserstrahls, der mindestens eine Wellenlänge aufweist, die mindestens 5 % größer als die Reflektivität der mindestens einen mit faserverstärktem Kunststoff gebildeten Lage (1.1, ...., 1.X) ist, wobei
nach einer Bestrahlung mit einem Laserstrahl in einem Bereich der Oberfläche ein Werkstoffabtrag ausgehend von der Bauteiloberfläche bis zur in Richtung des auftreffenden Laserstrahls weisenden Oberfläche der weiteren Lage (2) zur Ausbildung einer Vertiefung erfolgt ist.

2. Bauteil nach Anspruch 1, **dadurch gekennzeichnet, dass** der Werkstoff der weiteren Lage (2) eine Reflektivität des für einen Werkstoffabtrag eingesetzten Laserstrahls mit mindestens einer Wellenlänge aufweist, die mindestens 7 % größer als die Reflektivität der mindestens einen mit faserverstärktem Kunststoff gebildeten Lage (1.1, ...., 1.X) ist.

3. Bauteil nach einem der vorhergehenden Ansprüche, **dadurch gekennzeichnet, dass** die Lage(n) (1.1, ..., 1.X) an der/denen ein Werkstoffabtrag erfolgen soll, ist/sind mit einem Kunststoff dem Russ enthalten ist, gebildet ist/sind.

4. Bauteil nach einem der vorhergehenden Ansprüche, **dadurch gekennzeichnet, dass** zwischen mindestens einer Lage und der weiteren Lage (2) eine dritte Lage (5) angeordnet ist, so dass eine Vertiefung in der Oberfläche des Bauteils ausbildbar ist, die zweifach in ihrer Tiefe abgestuft ist oder mindestens zwei Vertiefungen in der Oberfläche des Bauteils ausbildbar sind, die jeweils eine unterschiedliche Tiefe aufweisen.

5. Bauteil nach einem der vorhergehenden Ansprüche, **dadurch gekennzeichnet, dass** die weitere Lage (2) und/oder die dritte Lage (5) aus unverstärktem Kunststoffmaterial gebildet ist/sind eine andere Dicke als die Lagen (1.1, ...., 1.X) aufweist/aufweisen.

6. Bauteil nach einem der vorhergehenden Ansprüche, **dadurch gekennzeichnet, dass** die mindestens eine Lage als Decklage (1.1) aus faserverstärktem Kunststoffmaterial gebildet ist.

7. Bauteil nach einem der vorhergehenden Ansprüche, **dadurch gekennzeichnet, dass** die mindestens eine mit faserverstärktem Kunststoff gebildete Lage (1.1, ......1.X) bei einem Laserstrahl mit einer Wellenlänge zwischen 340 nm und 1900 nm die Laserstrahlung mit mindestens 5 % weniger reflektiert, als eine weitere Lage (2) oder eine dritte Lage (5).

8. Verfahren zur Herstellung eines Bauteils nach einem der vorhergehenden Ansprüche, **dadurch gekennzeichnet, dass** mehrere Lagen (1.1, ..., 1.X) aus einem Kunststoffmaterial übereinander angeordnet werden, wobei mindestens eine der Lagen (1.1, ...1.X) aus faserverstärktem Kunststoff gebildet ist, wobei die mindestens eine Lage (1.1, .... 1.X) mit einem Kunststoff und/oder Fasern gebildet ist/sind, in dem/denen Pigmente enthalten sind oder Fasern eingesetzt sind, die mit oder aus Kohlenstoff gebildet sind, und dabei
zwischen den übereinander angeordneten Lagen (1.1, ...1.X) mindestens eine weitere Lage (2), die ohne Farb-Pigmente, mit weißen Pigmenten oder mit erheblich weniger Pigmenten, als in der mindestens einen Lage (1.1, .... 1.X) von der ein Werkstoffabtrag zur Ausbildung einer Vertiefung erfolgen soll, gebildet ist, angeordnet worden ist, und bei einer Konsolidierung, bei der zumindest mit einer thermischen Behandlung eine stoffschlüssige Verbindung der Lagen (1.1, ..., 1.X) erreicht wird, und wiederum daran anschließend ein auslenkbarer Laserstrahl mit seinem Brennfleck auf eine Oberfläche mit einer Leistung gerichtet wird, so dass in einem vorgebbaren Oberflächenbereich des Bauteils ein Werkstoffabtrag bis zur Oberfläche der weiteren Lage (2) erreicht wird.

9. Verfahren nach dem vorhergehenden Anspruch, **dadurch gekennzeichnet, dass** der Brennfleck des Laserstrahls mehrfach über den Oberflächenbereich in dem der Werkstoffabtrag erfolgen soll bewegt wird und/oder
ein Laserstrahl eingesetzt wird, dessen Wellenlänge zwischen 340 nm und 1900 nm ist und/oder
der Laserstrahl gepulst, bevorzugt mit einer Ein- und Ausschaltzeit im Bereich 10 ns bis 50 ns betrieben und/oder
der Brennfleck mit einer Vorschubgeschwindigkeit im Bereich 1500 mm/s bis 3500 mm/s bewegt und die Laserstrahlung mit einer Leistung im Bereich 5 W bis 30 W betrieben wird.

10. Verfahren nach einem der zwei vorhergehenden Ansprüche, **dadurch gekennzeichnet, dass** zwischen mindestens einer Lage (1.1, ..., 1.X) und der weiteren Lage (2) eine dritte Lage (5) angeordnet und in das Bauteil integriert wird und anschließend ein Werkstoffabtrag in einem Bereich des Bauteils ausgehend von einer Oberfläche des Bauteils bis zur Oberfläche der dritten Lage (5) mit dem Laserstrahl durchgeführt wird, wobei
in einem weiteren Bereich ein Werkstoffabtrag der dritten Lage (5) und mindestens einer aus faserverstärktem Kunststoffmaterial gebildeten Lage (1.1, ...., 1.X) mit dem Laserstrahl durchgeführt wird, so dass eine Vertiefung in der Oberfläche des Bauteils ausgebildet wird, die zweifach in ihrer Tiefe abgestuft ist oder mindestens zwei Vertiefungen in der Oberfläche des Bauteils ausgebildet werden, die jeweils eine unterschiedliche Tiefe aufweisen.

## Claims

1. A component which is formed with a plurality of layers (1.1, ...,1.X) arranged one over the other and in which a material removal has been performed using a laser beam to form a depression on the surface of the component having a predetermined depth proceeding from a surface of the component (6), in which at least one of the layers (1.1, .....1.X) is formed from a fiber-reinforced plastic material, wherein said at least one layer (1.1, ..... 1.X) is/are formed with a plastic and/or fibers containing pigments or employing fibers formed with or from carbon,
and
a further layer (2) without color pigments, with white pigments or with significantly fewer pigments than in at least one layer (1.1, .... 1.X) from which a material removal has been performed to form a depression, is arranged in a depth inside the component such that the surface which faces in the direction of the focal spot of the laser beam incident on the surface of the further layer is arranged in the plane up to which the material removal is to be performed, and in this case
the material of the further layer (2) has a reflectivity of the laser beam used for a material removal which has at least one wavelength which is at least 5% greater than the reflectivity of the at least one layer (1.1, ...., 1.X) formed with fiber-reinforced plastic, wherein
after an irradiation using a laser beam in a region of the surface, a material removal has been performed proceeding from the component surface up to the surface of the further layer (2) facing in the direction of the incident laser beam to form a depression.

2. The component as claimed in claim 1, **characterized in that** the material of the further layer (2) has a reflectivity of the laser beam used for a material removal having at least one wavelength which is at least 7% greater than the reflectivity of the at least one layer (1.1, ...., 1.X) formed with fiber-reinforced plastic.

3. The component as claimed in any one of the preceding claims, **characterized in that** the layer(s) (1.1, ..., 1.X) at which a material removal is to be performed is/are formed with a plastic, in which carbon black is contained.

4. The component as claimed in any one of the preceding claims, **characterized in that** a third layer (5) is arranged between at least one layer and the further layer (2), such that a depression can be formed in the surface of the component which is stepped twice in its depth or at least two depressions can be formed in the surface of the component, which each have a different depth.

5. The component as claimed in any one of the preceding claims, **characterized in that** the further layer (2) and/or the third layer (5) is/are formed from unreinforced plastic material and has/have a different thickness than the layers (1.1, ...., 1.X).

6. The component as claimed in any one of the preceding claims, **characterized in that** the at least one layer is formed as a cover layer (1.1) from fiber-reinforced plastic material.

7. The component as claimed in any one of the preceding claims, **characterized in that** the at least one layer (1.1, ......1.X) formed with fiber-reinforced plastic reflects the laser radiation at least 5% less in the case of a laser beam having a wavelength between 340 nm and 1900 nm than a further layer (2) or a third layer (5).

8. A method for producing a component as claimed in any one of the preceding claims, **characterized in that** multiple layers (1.1, ..., 1.X) made of a plastic material are arranged one over the other, wherein at least one of the layers (1.1, ...1.X) is formed from fiber-reinforced plastic, wherein the at least one layer (1.1, .... 1.X) is/are formed with a plastic and/or fibers in which pigments are contained or fibers are used which are formed with or from carbon, and in this case
at least one further layer (2), which is formed without color pigments, with white pigments or with significantly fewer pigments than in the at least one layer (1.1, .... 1.X) from which a material removal is to be performed to form a depression, has been arranged between the layers (1.1, ...1.X) arranged one over the other,
and during a consolidation, in which a material bond of the layers (1.1, ..., 1.X) is achieved at least using a thermal treatment, and in turn subsequently thereto a deflectable laser beam is oriented with its focal spot on a surface having a power such that a material removal up to the surface of the further layer (2) is achieved in a pre-determinable surface region of the component.

9. The method as claimed in the preceding claim, **characterized in that** the focal spot of the laser beam is moved multiple times over the surface region in which the material removal is to be performed and/or
a laser beam is used, the wavelength of which is between 340 nm and 1900 nm and/or
the laser beam is operated in a pulsed manner, preferably with a switch-on and switch-off time in the range of 10 ns to 50 ns and/or
the focal spot is moved at a feed speed in the range of 1500 mm/s to 3500 mm/s and the laser radiation is operated with a power in the range of 5 W to 30 W.

10. The method as claimed in either one of the two preceding claims, **characterized in that** a third layer (5) is arranged between at least one layer (1.1, ..., 1.X) and the further layer (2) and is integrated into the component and subsequently a material removal is carried out in a region of the component proceeding from a surface of the component up to the surface of the third layer (5) using the laser beam, wherein
in a further region, a material removal of the third layer (5) and at least one layer (1.1, ...., 1.X) formed from fiber-reinforced plastic material is carried out using the laser beam, such that a depression is formed in the surface of the component which is stepped twice in its depth or at least two depressions are formed in the surface of the component which each have a different depth.

## Revendications

1. Composant, qui est formé de plusieurs couches (1.1, ..., 1.X) disposées les unes sur les autres, et chez lequel est formé un retrait de matière pour la formation d'une cavité sur la surface du composant, avec une profondeur prédéfinie d'une surface du composant (6) avec un faisceau laser, pour lequel au moins une des couches (1.1, .....1.X) est formée à base d'une matière plastique renforcée de fibres, dans lequel la ou les couches (1.1, ..., 1.X) est formée ou sont formées avec une matière plastique et/ou des fibres, dans laquelle et/ou dans lesquelles des pigments sont contenus ou des fibres sont incorporées, qui sont formées avec ou à partir de carbone,
et,
à l'intérieur du composant, il y a eu formation d'une nouvelle couche (2), dépourvue de pigments colorés, avec des pigments blancs ou avec nettement moins de pigments que dans une couche ou des couches (1.1, ..., 1.X) à partir de laquelle il y a eu un retrait de matière pour la formation d'une cavité, à une profondeur, de sorte que la surface, qui est orientée en direction de la tache focale du faisceau laser se trouvant sur la surface de la nouvelle couche, est disposé dans le plan, jusqu'au lequel le retrait de matière doit avoir lieu, et ainsi
la matière de la nouvelle couche (2) présente une réflectivité du faisceau laser employé pour le retrait de matière, qui présente au moins une longueur d'onde, qui est au moins supérieure de 5 % à la réflectivité de la ou des couches(1.1, ...., 1.X) formée ou formées avec la matière plastique renforcée de fibres, où
après une illumination avec un faisceau laser dans une région de la surface, il y a un retrait de matière partant d'une surface de composant jusqu'à la surface de la nouvelle couche (2) orientée en direction du faisceau laser incident pour la formation d'une cavité.

2. Composant selon la revendication 1, **caractérisé en ce que** la matière de la nouvelle couche (2) présente une réflectivité du faisceau laser employé pour le retrait de matière avec au moins une longueur d'onde, qui est au moins supérieure de 7 % à la réflectivité de la ou des couches (1.1, ...., 1.X) formée ou formées avec la matière plastique renforcée de fibres.

3. Composant selon l'une des revendications précédentes, **caractérisé en ce que** la ou les couches (1.1, ..., 1.X), sur laquelle ou sur lesquelles un retrait de matière doit avoir lieu, est formée ou sont formées avec une matière plastique qui contient de la suie.

4. Composant selon l'une des revendications précédentes, **caractérisé en ce qu'**entre la ou les couches et la nouvelle couche (2), une troisième couche (5) est disposée, de sorte qu'une cavité peut être conçue dans la surface du composant qui est deux fois nivelée dans sa profondeur ou qu'au moins deux cavités peuvent être conçues dans la surface du composant qui présentent respectivement une profondeur différente.

5. Composant selon l'une des revendications précédentes, **caractérisé en ce que** la nouvelle couche (2) et/ou la troisième couche (5), est ou sont en matière plastique non renforcé et présente ou présentent une autre épaisseur que les couches (1.1, ..., 1.X).

6. Composant selon l'une des revendications précédentes, **caractérisé en ce que** la ou les couches servant de couche de recouvrement (1.1) est formée ou sont formées d'une matière plastique renforcée de fibres.

7. Composant selon l'une des revendications précédentes, **caractérisé en ce que** la ou les couches (1.1, ......1.X) formée ou formées avec la matière plastique renforcée de fibres réfléchit ou réfléchissent, pour un faisceau laser avec une longueur d'onde entre 340 nm et 1900 nm, le faisceau laser avec moins de 5 % qu'une nouvelle couche (2) ou une troisième couche (5).

8. Procédé de fabrication d'un composant selon l'une des revendications précédentes, **caractérisé en ce que** plusieurs couches (1.1, ..., 1.X) à base d'une matière plastique sont disposées les unes sur les autres, dans lequel au moins une des couches (1.1, .....1.X) est formée à base d'une matière plastique renforcée de fibres, dans lequel la ou les couches (1.1, ..., 1.X) est formée ou sont formées avec une matière plastique et/ou des fibres, dans laquelle et/ou dans lesquelles des pigments sont contenus ou des fibres sont employées, qui sont formées avec ou à partir de carbone, et ainsi,
entre les couches (1.1, ...1.X) disposées les unes sur les autres, au moins une nouvelle couche (2), qui est dépourvue de pigments colorés, avec des pigments blancs ou avec nettement moins de pigments que dans la ou les couches (1.1, ...1.X) à partir de laquelle un retrait de matière doit avoir lieu pour la formation d'une cavité, a été disposée,
et, lors d'une consolidation, dans laquelle au moins une liaison par complémentarité des matières des couches (1.1, ..., 1.X) est obtenue avec un traitement thermique, et ensuite, de nouveau, un faisceau laser pouvant être déployé avec une tache focale peut être orienté sur une surface avec une puissance, de sorte que, dans une région de surface pouvant être prédéfinie du composant, un retrait de matière est atteint jusqu'à la surface de la nouvelle couche (2).

9. Procédé selon la revendication précédente, **caractérisé en ce que** la tache focale du faisceau laser doit être déplacée plusieurs fois par-dessus la région de surface dans laquelle doit être effectué le retrait de matière, et/ou
on emploie un faisceau laser dont la longueur d'onde se situe entre 340 nm et 1900 nm, et/ou
le faisceau laser est activé par pulsations, de préférence avec un temps d'action et d'arrêt dans la plage de 10 ns à 50 ns, et/ou
la tache focale est déplacée avec une vitesse d'avancement dans la plage de 1500 mm/s à 3500 mm/s et le faisceau laser est activé avec une puissance dans la plage de 5 W à 30 W.

10. Procédé selon l'une des deux revendications précédentes, **caractérisé en ce qu'**une troisième couche (5) est disposée entre au moins une couche (1.1, ..., 1.X) et la nouvelle couche (2) et est intégrée dans le composant, et ensuite, on procède à un retrait de matière dans une région du composant en partant d'une surface du composant jusqu'à la surface de la troisième couche (5) avec le faisceau laser, où
dans une nouvelle région, on effectue un retrait de matière de la troisième couche (5) et d'au moins une couche (1.1, ..., 1.X) formée de matière plastique renforcée de fibres avec le faisceau laser, de sorte qu'une cavité est formée dans la surface du composant, qui est deux fois nivelée dans sa profondeur ou qu'au moins deux cavités sont conçues dans la surface du composant, qui présentent respectivement une profondeur différente.
